# EUROPEAN PATENT APPLICATION

(11) **EP 4 432 398 A1**
(43) Date of publication of application: **18.09.2024**
(21) Application number: 23204012.1
(22) Date of filing: 17.10.2023
(51) Int. Cl.: H01M 4/50, H01M 4/62, H01M 10/0525, C01G 33/00

(54) **ELECTRODE SLURRY, ELECTRODE, SECONDARY BATTERY, BATTERY PACK, AND VEHICLE**

(30) Priority: 17.03.2023 JP 2023043290
(71) Applicant: Kabushiki Kaisha Toshiba, Tokyo 105-0023 (JP)
(72) Inventor: MURATA, Yoshiaki, Minato-ku, Tokyo, 105-0023 (JP); YAMASHITA, Yasunobu, Minato-ku, Tokyo, 105-0023 (JP); HARADA, Yasuhiro, Minato-ku, Tokyo, 105-0023 (JP); TAKAMI, Norio, Minato-ku, Tokyo, 105-0023 (JP)
(74) Representative: Hoffmann Eitle

(57) **Abstract**

According to one approach, provided is an electrode slurry including carboxymethyl cellulose and niobium oxide particles. A degree of etherification of the carboxymethyl cellulose is 0.6 or more and 1.0 or less. A contact angle with water according to a permeation rate method of the niobium oxide particles is 83° or more.

## Description

### FIELD

The present disclosure relates to an electrode slurry, an electrode, a secondary battery, a battery pack, and a vehicle.

### BACKGROUND

Recently, secondary batteries, such as a nonaqueous electrolyte secondary battery like a lithium ion secondary battery, have been actively researched and developed as a high energy-density battery. The secondary batteries, such as a nonaqueous electrolyte secondary battery, are anticipated as a power source for vehicles such as hybrid electric automobiles, electric automobiles, an uninterruptible power supply for base stations for portable telephones, or the like. Therefore, the secondary battery is demanded to, in addition to having a high energy density, be excellent in other performances such as rapid charge-discharge performances and long-term reliability, as well. For example, not only is the charging time remarkably shortened in a secondary battery capable of rapid charge and discharge, but the battery is also capable of improving motive performances in vehicles such as hybrid electric automobiles, and efficient recovery of regenerative energy of motive force.

In order to enable rapid charge/discharge, electrons and lithium ions must be able to migrate rapidly between the positive electrode and the negative electrode. However, when a battery using a carbon-based negative electrode is repeatedly subjected to rapid charge and discharge, precipitation of dendrite of metallic lithium on the electrode may sometimes occur, raising concern of heat generation or ignition due to internal short circuits.

In light of this, a battery using a metal composite oxide in a negative electrode in place of a carbonaceous material has been developed. In particular, in a battery using an oxide of titanium in the negative electrode, rapid charge and discharge can be stably performed. Such a battery also has a longer life than in the case of using a carbon-based negative electrode.

However, compared to carbonaceous materials, oxides of titanium have a higher potential relative to metallic lithium. That is, oxides of titanium are more noble. Furthermore, oxides of titanium have a lower capacity per weight. Therefore, a battery using an oxide of titanium for the negative electrode has a problem that the energy density is low.

For example, an electrode potential of an oxide of titanium is about 1.5 V (vs. Li/Li⁺) with respect to metallic lithium electrode, which is higher (more noble) compared to potentials of a carbon-based negative electrodes. The potential of an oxide of titanium is electrochemically restricted due to being caused by oxidation-reduction reactions between Ti³⁺ and Ti⁴⁺ upon insertion and extraction of lithium. In addition, there is also a fact that rapid charge and discharge of lithium ions can be stably performed at a high electrode potential of about 1.5 V (vs. Li/Li⁺). Therefore, it has been conventionally difficult to reduce the electrode potential in order to improve the energy density.

On the other hand, considering the capacity per unit weight, the theoretical capacity of titanium dioxide (anatase structure) is about 165 mAh/g, and the theoretical capacity of spinel lithium-titanium oxides such as Li₄Ti₅O₁₂ is about 180 mAh/g. On another hand, the theoretical capacity of a general graphite based electrode material is 385 mAh/g and greater. As such, the capacity density of an oxide of titanium is significantly lower than that of the carbon based negative electrode material. This is due to there being few lithium-insertion sites in the crystal structure, and lithium tending to be stabilized in the structure, and thus, substantial capacity being reduced.

In view of the above circumstances, a new electrode material containing Ti and Nb has been studied. Such a niobium-titanium oxide material is expected to have a high charge/discharge capacity. For example, an oxide represented by TiNb₂O₇ has a high theoretical capacity exceeding 380 mAh/g. Therefore, the niobium-titanium oxide is expected as a high-capacity material in place of Li₄Ti₅O₁₂.

### BRIEF DESCRIPTION OF THE DRAWINGS

FIG. 1 is a cross-sectional view schematically showing an example of a secondary battery according to an approach.
FIG. 2 is an enlarged cross-sectional view of section A of the secondary battery shown in FIG. 1.
FIG. 3 is a partially cut-out perspective view schematically showing another example of the secondary battery according to an approach.
FIG. 4 is an enlarged cross-sectional view of section B of the secondary battery shown in FIG. 3.
FIG. 5 is a perspective view schematically showing an example of a battery module according to an approach.
FIG. 6 is an exploded perspective view schematically showing an example of a battery pack according to an approach.
FIG. 7 is a block diagram showing an example of an electric circuit of the battery pack shown in FIG. 6.
FIG. 8 is a partially see-through diagram schematically showing an example of a vehicle according to an approach.
FIG. 9 is a diagram schematically showing an example of a control system related to an electric system in the vehicle according to an approach.

### DETAILED DESCRIPTION

According to one approach, provided is an electrode slurry including carboxymethyl cellulose and niobium oxide particles. A degree of etherification of the carboxymethyl cellulose is 0.6 or more and 1.0 or less. A contact angle with water according to a permeation rate method of the niobium oxide particles is 83° or more.

According to another approach, provided is an electrode including carboxymethyl cellulose and niobium oxide particles. A degree of etherification of the carboxymethyl cellulose is 0.6 or more and 1.0 or less. A contact angle with water according to a permeation rate method of the niobium oxide particles is 83° or more.

According to another approach, provided is a secondary battery including a positive electrode, a negative electrode, and an electrolyte. The negative electrode includes the electrode according to the above approach.

According to another approach, provided is a battery pack including the secondary battery according to the above approach.

According to another approach, provided is a vehicle including the battery pack according to the above approach.

According to the above approaches, there are provided an electrode slurry and an electrode capable of realizing a secondary battery that can exhibit excellent output performance and excellent cycle life performance, a secondary battery including the electrode, a battery pack including the secondary battery, and a vehicle onto which the battery pack is installed.

Hereinafter, approaches will be described with reference to the drawings. The same reference signs are applied to common components throughout the approaches and overlapped explanations are thereby omitted. Each drawing is a schematic view for encouraging explanations of the approach and understanding thereof, and thus there are some details in which a shape, a size and a ratio are different from those in an actual device; they can however be appropriately design-changed, taking into account the following explanations and known technology.

### (First approach)

According to a first approach, an electrode slurry is provided. The electrode slurry includes carboxymethyl cellulose and niobium oxide particles. A degree of etherification of the carboxymethyl cellulose is 0.6 or more and 1.0 or less. A contact angle with water for the niobium oxide particles is 83° or more. The contact angle with water as described herein is a contact angle according to a permeation rate method.

The electrode slurry may be a slurry used for producing an electrode for a battery. The battery electrode may be, for example, an electrode of a secondary battery such as a lithium ion battery, a nonaqueous electrolyte battery, etc. The electrode slurry may be, for example, a negative electrode slurry used in production of the negative electrode of a secondary battery.

The electrode slurry may further contain a binder and an electro-conductive agent in addition to carboxymethyl cellulose (CMC) and niobium oxide particles. CMC can function as a thickener in the electrode slurry. The niobium oxide particles are contained in the electrode slurry as an electrode active material. In an electrode slurry of the aspect of a negative electrode slurry, the niobium oxide particles may be contained as a negative electrode active material.

Niobium-titanium oxides (for example, TiNb₂O₇ (TNO)) exhibit a higher energy density than lithium-titanium oxides (for example, Li₄Ti₅O₁₂ (TLO)). However, although TNO has higher input performance (charge performance) than TLO, the output performance thereof tends to be equal or slightly lower. Further, TNO exhibits a volume change during charge/discharge of the battery, and hence in an electrode containing TNO, cracking of TNO particles themselves or cracking of the electrode may occur due to the volume change of TNO. Due to this, disconnection of an electron conduction path may occur, and the utilization rate inside the electrode may be degraded. In addition, the area of the active surface of the TNO particles is increased by cracking of the TNO particles, and decomposition reaction of an electrolyte such as an electrolytic solution (liquid electrolyte) is promoted. Coating formation on TNO due to decomposition of the electrolytic solution is accelerated, movement of lithium ions (Li⁺) is inhibited by the coating, and the internal resistance of the battery is increased. In contrast, TLO has no volume change during charge/discharge, and hence does not experience the degradation of the electrode utilization rate or the resistance increase mentioned above. Therefore, TLO is more advantageous than TNO in terms of charge/discharge cycle performance. As such, although TNO is more preferable as an electrode active material than TLO from the perspective of capacity, TNO has room for improvement in output performance and cycle life performance.

The electrode slurry according to the approach contains hydrophobic particles as niobium oxide particles, such as of TNO. Specifically, for the niobium oxide particles, the contact angle with water as determined by a permeation rate method (Washburn method) is 83° or more. Further, the electrode slurry contains CMC having a low degree of etherification. Specifically, the degree of etherification of CMC is 0.6 or more and 1.0 or less. The degree of etherification is preferably less than 1.0, and more preferably 0.8 or less. In addition to a function as a thickener, CMC in the slurry can make further actions such as followability to the volume change of the niobium oxide particles and an effect of preventing side reactions of the niobium oxide particles. The affinity of CMC having a low degree of etherification with the surface of hydrophobic niobium oxide particles is good, and hence the above actions by CMC are favorably brought out in such a combination of materials. Therefore, an electrode produced using an electrode slurry containing materials of a combination like the above can exhibit improved output performance (coulombic efficiency) and improved cycle life performance.

The hydrophobicity of the niobium oxide particles is influenced by the synthesis conditions, etc. For example, the synthesis of niobium oxide particles is performed, in gist, by mixing starting materials and firing the obtained mixture. The method of mixing starting materials and the firing temperature influence the contact angle of the obtained oxide particles with water. The method of mixing the starting materials can be roughly categorized into a liquid phase mixing method and a solid phase mixing method. The liquid phase mixing method tends to allow the firing temperature to be kept low. By lowering the firing temperature, the particle size of the obtained fired powder can be suppressed to a low level. In a case where the particle size after firing is large, the particle size may be adjusted to a desired particle size by performing pulverization treatments. However, an amorphous phase is formed on the particle surface by pulverization treatment.

The amorphous phase tends to have a larger amount of hydroxy groups on the surface as compared to a crystalline phase. Hence, the amorphous phase exhibits hydrophilicity. Therefore, by pulverization, the niobium oxide particles approach hydrophilicity, and have a reduced contact angle with water.

The niobium oxide particles may contain, for example, an alkali residual component derived from a starting material as an impurity. Examples of the alkali include potassium. The number of hydroxy groups on the particle surface is increased also by the alkali residual component. Therefore, in a case where the alkali concentration is high, the contact angle of the niobium oxide particles with water is reduced.

Carboxymethyl cellulose has a chemical structure represented by the following structural formula. In the following formula, R is a carboxymethyl group (for example, CH₂COOH, CH₂COONa, or CH₂COONH₄) or hydrogen (H) .

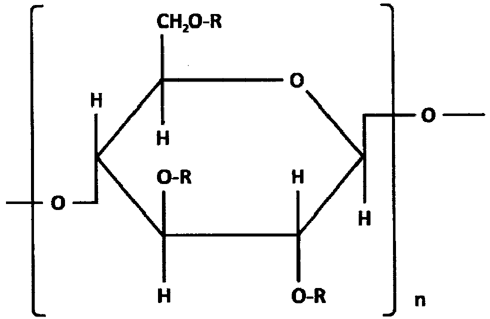

As indicated by the above formula, the carboxymethyl cellulose is obtained by substituting OH groups (R = H) of a cellulose frame with carboxymethyl groups (R = CH₂COOH, etc.). The properties of carboxymethyl cellulose differ according to the degree of substitution. The substitution amount per unit frame is referred to as the degree of etherification. Since carboxymethyl cellulose has three OH groups, the maximum degree of etherification is 3.

The lower the degree of etherification of the carboxymethyl cellulose, the greater the followability with respect to the volume change of the niobium oxide particles. This is because CMC molecules become tangled with one another due to pseudo-crosslinking of unsubstituted cellulose portions when the degree of etherification is low, whereby thixotropy (rocking property) and other properties develop. In addition, the network structure formed by the pseudo-crosslinking between CMC molecules has high affinity with hydrophobic material surfaces.

On the contrary, CMC having a high degree of etherification can exhibit superior flexibility, since there are less crosslinking between CMC molecules. Therefore, from the perspective of flexibility of the electrode, a degree of etherification of 0.6 or more is desirable. A higher flexibility allows the pressure upon adjusting the electrode density can be made lower, and is thus desirable from the perspective of preventing cracking at the time of pressing. Moreover, when a wound electrode group is to be configured using the electrode, a flexible electrode is desirable.

A method for measuring the contact angle of the niobium oxide particles with water based on the permeation rate method and a method for measuring the degree of etherification of CMC will be described later.

The average particle size x of the niobium oxide particles is preferably 1.5 µm or less. The average particle size x herein refers to a particle size D₅₀ at which the volume cumulative frequency is 50% from the small particle size side in a particle size distribution chart of niobium oxide particles obtained by the laser diffraction scattering method. The niobium oxide particles can take, for example, a form of primary particles or a form of secondary particles formed by agglomeration of primary particles. The niobium oxide particles may be a mixture of primary particles and secondary particles. The particle size distribution chart reflects both the primary particle size and the secondary particle size of the niobium oxide particles. The particle size distribution chart may correspond to a histogram of the particle size of the niobium oxide particles.

The molecular weight of carboxymethyl cellulose is desirably low. The molecular weight of CMC influences the viscosity of an aqueous solution containing CMC; given this, CMC preferably has a molecular weight whereby the numerical value expressed in units of mPa·s of the viscosity y of an aqueous solution in which 1% by mass of CMC is dissolved (a 1% viscosity y) is 100 times or less the numerical value expressing the average particle size x of the niobium oxide particles in units of µm. In other words, it is preferable that the 1% viscosity y of carboxymethyl cellulose and the average particle size x of the niobium oxide particles satisfy y ≤ x × 100 mPa·s/µm.

Use of fine TNO particles is also known as a measure of improving the output performance of TNO. On one hand, the use of fine particles is effective as a measure against cracking of particles and for increase of output. On the other hand, in a case where TNO of fine particles is used, the amount of side reactions is increased, whereby gas generation occurs and a mismatch in the state of charge (SOC) between the positive and negative electrodes arises due to Li⁺ being consumed and not migrating to the positive electrode; hence, life performance such as a cycle capacity retention ratio or the like may be reduced.

By the average particle size x of the niobium oxide particles being 1.5 µm or less, cracking of particles can be effectively suppressed. By using CMC having a low molecular weight satisfying the 1% viscosity y mentioned above together with such fine niobium oxide particles, an electrode in which niobium oxide particles are uniformly coated with the CMC can be produced. Thus, by combining fine niobium oxide particles with CMC that has an appropriately small molecular weight in accordance with the particle size of the niobium oxide particles, the oxide particles can be favorably coated with CMC, and the amount of side reactions can be further reduced. Thereby, the effect of improving output performance and cycle life performance is improved.

The average particle size x of the niobium oxide particles is more preferably 0.4 µm or more. In a case where an electro-conductive agent is included in the electrode slurry, the electro-conductive agent can be placed in gaps generated between niobium oxide particles by using, as active material particles, niobium oxide particles having particle sizes larger than the sizes of pieces of the electro-conductive agent. Thereby, electrical conductivity can be secured even in a case where a small amount of the electro-conductive agent is included, and hence an improvement in the energy density of the obtained electrode can be achieved. Thus, for example, niobium oxide particles having an average particle size x of 0.4 µm or more is preferably used, which is significantly larger than the primary particle size of an electro-conductive agent in a particulate form.

A method for measuring the 1% viscosity y of CMC will be described later.

The niobium oxide particles are, for example, particles of one or more selected from the group consisting of niobium pentoxide (Nb₂O₅), niobium titanium oxides, and other niobium-containing oxides. The niobium oxide particles may be particles of a single phase of a niobium oxide, or may be particles of a mixed phase containing plural oxide phases.

Examples of the niobium titanium oxide include a compound represented by LiₓTi_{1-y}M1_{y}Nb_{2-z}M2_{z}O_{7+δ} having a monoclinic structure. Here, M1 is at least one selected from the group consisting of Zr, Si, and Sn. M2 is at least one selected from the group consisting of V, Ta, and Bi. The respective subscripts in the composition formula are specified as follows: 0 ≤ x ≤ 5, 0 ≤ y < 1, 0 ≤ z < 2, and -0.3 ≤ δ ≤ 0.3. Specific examples of the monoclinic niobium titanium composite oxide include LiₓNb₂TiO₇ (0 ≤ x ≤ 5).

Another example of the niobium titanium oxide is a compound represented by LiₓTi_{1-y}M3_{y+z}Nb_{2-z}O_{7-δ} having a monoclinic structure. Here, M3 is at least one selected from the group consisting of Mg, Fe, Ni, Co, W, Ta, and Mo. The respective subscripts in the composition formula are specified as follows: 0 ≤ x < 5, 0 ≤ y < 1, 0 ≤ z < 2, and -0.3 ≤ δ ≤ 0.3.

Another example of the niobium titanium oxide may be a compound containing one or more Nb-rich phases selected from the group consisting of a Nb₁₀Ti₂O₂₉ phase, a Nb₁₄TiO₃₇ phase, and a Nb₂₄TiO₆₄ phase. Further, a phase of the monoclinic niobium titanium oxide of the examples described above and one or more of these Nb-rich phases may form a mixed phase, and compose niobium oxide particles.

Other examples of the niobium-containing oxide include various Wadsley-Roth phase niobium oxides and non-Wadsley-Roth phase niobium oxides. Specific examples of the former include Nb₁₆W₅O₅₅. Specific examples of the latter include Nb₁₈W₁₆O₉₃.

The electrode slurry may include another active material, in addition to the niobium oxide particles as active material particles. For example, in the case the electrode slurry is to be a negative electrode slurry, examples of such other active materials include lithium titanate having a ramsdellite structure (e.g., Li_{2+y}Ti₃O₇, 0 ≤ y ≤ 3), lithium titanate having a spinel structure (e.g. , Li₄₊ₓTi₅O₁₂, 0 ≤ x ≤ 3), titanium dioxide (TiO₂), anatase titanium dioxide, rutile titanium dioxide, hollandite titanium composite oxide, and orthorhombic titanium composite oxides.

Examples of the orthorhombic titanium-containing composite oxide include a compound represented by Li₂₊ₐM^{I}_{2-b}Ti_{6-c}M^{II}_{d}O_{14+σ}. Here, M^{I} is at least one selected from the group consisting of Sr, Ba, Ca, Mg, Na, Cs, Rb and K. M^{II} is at least one selected from the group consisting of Zr, Sn, V, Nb, Ta, Mo, W, Y, Fe, Co, Cr, Mn, Ni and Al. The respective subscripts in the composition formula are specified as follows: 0 ≤ a ≤ 6, 0 ≤ b < 2, 0 ≤ c < 6, 0 ≤ d < 6, and -0.5 ≤ σ ≤ 0.5. Specific examples of the orthorhombic titanium-containing composite oxide include Li₂₊ₐNa₂Ti₆O₁₄ (0 ≤ a ≤ 6) .

The electro-conductive agent is added to improve current collection performance of the electrode to be obtained. In addition, production of an electrode may include using the electrode slurry to form an active material-containing layer on a current collector, and the electro-conductive agent also functions to suppress the contact resistance between the current collector and the active material, such as the niobium oxide particles. Examples of the electro-conductive agent include carbonaceous substances such as vapor grown carbon fiber (VGCF), carbon blacks such as acetylene black, graphite, carbon nanotubes, and carbon nanofibers. One of these may be used as the electro-conductive agent, or alternatively, two or more may be used in combination as the electro-conductive agent. Alternatively, instead of using an electro-conductive agent, a carbon coating or an electro-conductive inorganic material coating may be applied to the surface of the active material particle, such as the niobium oxide particles.

The binder is added to fill gaps among the dispersed active material and also to bind the active material with the current collector, in the electrode to be obtained. Examples of the binder include polytetrafluoroethylene (PTFE), polyvinylidene fluoride (PVdF), fluorine rubber, styrene-butadiene rubber, polyacrylate compounds, and imide compounds. One of these may be used as the binder, or alternatively, two or more may be used in combination as the binder.

In the electrode slurry, the total content of carboxymethyl cellulose, the binder, and the electro-conductive agent is desirably 0.5 parts by mass or more and 20 parts by mass or less with respect to 100 parts by mass of the niobium oxide particles. An electrode formed with an electrode slurry thus having a large proportional content of niobium oxide particles has high energy density. The proportions of other active materials besides the niobium oxide particles incorporated into the electrode slurry is desirably 25 parts by mass or less with respect to 100 parts by mass of the niobium oxide particles.

### <Preparation Method>

The electrode slurry can be prepared as follows, for example. Niobium oxide particles and carboxymethyl cellulose, and optionally other active materials, a binder, and an electro-conductive agent are suspended in a suitable solvent to prepare a slurry. As the solvent, water, in which carboxymethyl cellulose can be dissolved, can be used.

### <Contact Angle Measurement by Permeation Rate Method>

The contact angle of the niobium oxide particles with water can be measured as follows by a permeation rate method (Washburn method).

For the measurement, a powder contact angle meter using a Washburn method is used. Specifically, K 100 of KRUSS GmbH can be used. A powder sample of niobium oxide particles to be measured is prepared. The powder is loaded into a capillary, and the lower end of the capillary is immersed in a liquid with the capillary stood vertically. The loading of the powder in the capillary is performed with ten sequences of tapping. The time the liquid takes to seep up through the powder from the lower end of the capillary and the wet load are measured, and the contact angle is calculated by the following formula. First, the capillary constant is calculated using hexane, for which contact angle = 0°, as the liquid. After that, the liquid is changed to water (for example, pure water), and measurement is performed to calculate the contact angle. $cos θ = \frac{{m}^{2}}{t} \times \frac{η}{{ρ}^{2} \times {σ}_{L} \times c}$

The symbols in the above formula are as follows:
θ: contact angle
m: measured load
t: time
η: viscosity of liquid
ρ: density of liquid
σ_{L}: surface tension of liquid
c: capillary constant.

### <Measurement of Crystal Structure by Powder X-Ray Diffraction Method>

The crystal structure of the niobium oxide and other active materials can be determined by powder X-ray diffraction (XRD) measurement. The XRD measurement can be performed, for example, as follows.

First, the target sample is ground until an average particle size reaches about 5 µm. The ground sample is loaded into a holder part of a depth of 0.2 mm formed on a glass sample plate. At this time, care should be taken to fill the holder part sufficiently with the sample. In addition, precaution should be taken to load an amount of the sample that is neither excessive nor insufficient such that cracks, voids, and the like do not occur. Next, another glass plate is pressed from outside to flatten a surface of the sample filled into the holder part. Precaution should be taken not to cause recesses or protrusions with respect of a reference plane of the holder due to an excessive or insufficient amount of filling.

Next, the glass plate filled with the sample is set in a powder X-ray diffractometer, and a diffraction pattern (X-Ray diffraction pattern (XRD pattern)) is obtained using Cu-Kα rays.

Incidentally, there is a case where the orientation of the sample increases depending on a particle shape of the sample. In the case where there is high degree of orientation in the sample, there is the possibility of deviation of the peak or variation in an intensity ratio, depending on the filling state of the sample. The sample whose orientation is significantly high in this manner is measured using a glass capillary. Specifically, the sample is inserted into a capillary, and this capillary is placed on a rotary sample stage and measured. By such a measuring method, the orientation can be alleviated. A capillary formed of Lindeman glass having a diameter of 1 mm to 6 mm ϕ is preferably used as the glass capillary.

As an apparatus for powder X-ray diffraction measurement, SmartLab manufactured by Rigaku Corporation, for example, is used. The measurement conditions are as follows:
X-ray source: Cu target
Output: 45kV 200mA
Soller slit: 5° for both incident and received light
Step width (2θ): 0.01 deg
Scan rate: 2 deg/min
Semiconductor detector: D/teX Ultra 250
Sample plate holder: flat glass sample plate holder (thickness: 0.5 mm)
Measurement range: 5° ≤ 2θ ≤ 90°

When another apparatus is used, measurement is performed using standard Si powder for powder X-ray diffraction to find conditions under which measurement results of the peak intensity, the half width, and the diffraction angle equivalent to the results obtained using the above-described apparatus can be obtained, and samples are measured under such conditions.

Conditions of the above powder X ray diffraction measurement is set, such that an XRD pattern applicable to Rietveld analysis is obtained. In order to collect data for Rietveld analysis, specifically, the measurement time or X ray intensity is appropriately adjusted in such a manner that the step width is made 1/3 to 1/5 of the minimum half width of the diffraction peaks, and the intensity at the peak position of strongest reflected intensity is 5,000 cps or more. Rietveld analysis can be performed, for example, based on the method described in "Funmatsu X-sen Kaiseki no Jissai (Reality of Powder X-Ray Analysis)", first edition (2002), X-Ray Analysis Investigation Conversazione, The Japan Society for Analytical Chemistry, written and edited by Izumi Nakai and Fujio Izumi (Asakura Publishing Co., Ltd.).

### <Measurement of Composition by Inductively Coupled Plasma Atomic Emission Spectroscopy>

The composition of an active material such as a niobium oxide can be found by inductively coupled plasma atomic emission spectroscopy (ICP-AES analysis).

The prepared sample is subjected to vacuum drying at a temperature of 140°C for 24 hours. Next, the total weight of the sample is measured in a dry atmosphere. The sample is dissolved in an acid and subjected to inductively coupled plasma atomic emission spectroscopy (ICP-AES analysis). By ICP-AES, qualitative analysis and quantitative analysis of elements contained in the sample can be performed.

### <Measurement of Degree of Etherification by Incineration Measuring Method>

The degree of etherification of carboxymethyl cellulose can be measured using, for example, an incineration measuring method, as described below.

First, about 0.7 g of a sample (anhydride) is accurately weighted, wrapped in a filter paper, and placed in a magnetic crucible. The sample is sufficiently subjected to incineration at 600° C. After cooling, the sample is moved to a 500 ml volume beaker. About 250 ml of water and 35 ml of 0.05 mol/l sulfuric acid are added thereto, and the mixture is boiled for 30 minutes. After cooling, a phenolphthalein indicator is added thereto, and excess acid is subjected to back titration by 0.1 mol/l potassium hydroxide. The degree of etherification of the carboxymethyl cellulose can be calculated by introducing the result into the following formula: $Degree of etherification = 162 \times A/ \left(10000-80\times A\right)$

(Here, A is the ml value of 0.05 mol/l sulfuric acid consumed by binding alkali in 1 g of the sample.)

### <Measurement of 1% Viscosity>

The viscosity of a 1% aqueous solution of CMC can be measured using a rotational viscometer as follows. The equipment for measurement is not set in particular. For example, a plate rotational viscometer can be used. The measurement conditions are 25°C and 60 s⁻¹. The measurement sample is prepared by dissolving 1% by mass of CMC in water. However, in a case where the viscosity of a 1% (by mass) aqueous solution is less than the lower limit of measurement whereby the viscosity cannot be measured, a 2%(by mass) aqueous solution may be used instead for measurement.

According to a first approach, an electrode slurry is provided. The slurry includes carboxymethyl cellulose with a degree of etherification of 0.6 or more and 1.0 or less, and niobium oxide particles that has a contact angle with water according to a permeation rate method of 83° or more. The electrode slurry can realize a secondary battery that can exhibit excellent output performance and cycle life performance.

### (Second approach)

According to a second approach, an electrode is provided. The electrode includes carboxymethyl cellulose and niobium oxide particles. A degree of etherification of the carboxymethyl cellulose is 0.6 or more and 1.0 or less. A contact angle with water of the niobium oxide particles is 83° or more. The contact angle with water as described herein is a contact angle according to a permeation rate method.

The electrode according to the second approach may be an electrode fabricated using the electrode slurry according to the first approach. This electrode may be a battery electrode. The electrode as the battery electrode may be, for example, a negative electrode.

The electrode may include a current collector and an active material-containing layer. The active material-containing layer may be formed on both of obverse and reverse surfaces or one surface of the current collector. The active material-containing layer may contain the active material, and optionally an electro-conductive agent and a binder.

The active material-containing layer may be one formed from the electrode slurry according to the first approach. The active material-containing layer at least include the above-described niobium oxide particles as active material.

The active material-containing layer may contain the above niobium oxide particles alone as active material, or may contain two or more species of the niobium oxide particles. Furthermore, the active material-containing layer may contain a mixture obtained by mixing one specie or two or more species of the niobium oxide particles with one species or two or more species of other active materials.

Details of the niobium oxide particles overlap with those described for the electrode slurry according to the first approach. Details of other active materials overlap with those described in the first approach, as well. Thus, these details are omitted.

The average particle size × (D₅₀) of the niobium oxide particles is preferably 1.5 µm or less. The average particle size x is more preferably 0.4 µm or more. Further, the viscosity y of an aqueous solution in which 1% by mass of CMC contained in the electrode is dissolved in water and the average particle size x of the niobium oxide particles preferably satisfy y ≤ x × 100 mPa·s/µm. The reasons therefore overlap with those described in the first approach, and thus details thereof are omitted.

The total amount of carboxymethyl cellulose, the binder, and the electro-conductive agent contained in the electrode is preferably 0.5 parts by mass or more and 20 parts by mass or less with respect to 100 parts by mass of the niobium oxide particles. An electrode thus having a large content ratio of niobium oxide particles has high energy density. The ratio of other active materials besides the niobium oxide particles contained in the electrode is desirably 100 parts by mass or less and preferably 25 parts by mass or less with respect to 100 parts by mass of the niobium oxide particles.

There may be used for the current collector, a material which is electrochemically stable at the potential (vs. Li/Li⁺) at which lithium (Li) is inserted into and extracted from the active material. For example in the case where the active material is used as a negative electrode active material, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably from 5 µm to 20 µm. The current collector having such a thickness can maintain balance between the strength and weight reduction of the electrode.

The current collector may include a portion where the active material-containing layer is not formed on a surface thereof. This portion may serve as a current collecting tab.

The electrode may be fabricated by the following method, for example. First, the electrode slurry according to the first approach is prepared. The slurry is applied onto one surface or both of obverse and reverse surfaces of a current collector. Next, the applied slurry is dried so as to obtain a stack of active material-containing layer and current collector. Then, the stack is subjected to pressing. The electrode can be fabricated in this manner.

When performing various measurements on the electrode, the measurements are performed, for example, as follows.

First, in order to ascertain the crystal structure of the active material by powder X-ray diffraction measurement, a state in which lithium ions are completely extracted from the active material is achieved. For example, in the case of a negative electrode, the battery including the negative electrode is put into a completely-discharged state. For example, the discharged state of the battery can be achieved by repeating several times a discharging of the battery in a 25°C environment at 0.1 C current to a rated end voltage or to a battery voltage of 1.0 V, making the current value during discharge be 1/100 or lower than the rated capacity. There is a case where a lithium ion remains even in the discharged state.

Next, the battery is disassembled in a glove box filled with argon, and the electrode is taken out and washed with an appropriate solvent. As an appropriate solvent, for example, ethyl methyl carbonate may be used. If the washing of the electrode is insufficient, an impurity phase such as lithium carbonate and lithium fluoride may be mixed in due to the influence of the lithium ion remaining in the electrode. In such a case, it is preferable to use an airtight container within which measurement can be carried out in an inert gas. The washed electrode is cut so as to have the area approximately be equal to the area of the holder of the powder X-ray diffractometer, whereby a sample for powder X-ray diffraction measurement can be obtained. The sample is directly attached to the glass holder to perform powder X-ray diffraction measurement.

At this time, peaks derived from a metal foil serving as a current collector, an electro-conductive agent, a binder, and the like are measured and ascertained in advance using XRD. It is a matter of course that this operation can be omitted if such peaks have been ascertained in advance. When the peak of the current collector and the peak of the active material overlap with each other, it is desirable to perform the measurement after dislodging the active material-containing layer off from the current collector. This is in order to separate the overlapping peaks when quantitatively measuring the peak intensity. Although the active material-containing layer may be physically dislodged, the layer can be easily removed by applying ultrasonic waves in a solvent. When ultrasonic treatment is performed to dislodge the active material-containing layer from the current collector, an electrode body powder (including the active material, electro-conductive agent, and binder) can be collected by evaporating off the solvent. The powder X-ray diffraction measurement of the active material can be performed by filling for example, a Lindemann glass capillary or the like with the collected electrode body powder and performing the measurement. The electrode body powder collected by the ultrasonic treatment can also be subjected to various analysis other than the powder X-ray diffraction measurement.

For CMC contained in an electrode, for example, measurement can be performed using CMC extracted into water as the sample. Regarding the extraction conditions, although extraction is possible at any temperature from among a high temperature, room temperature, and a low temperature, extraction is preferably performed at 50°C to 80°C, taking about 1 hour to 5 hours. The obtained extracted material is filtered, then the concentration of the filtrate is adjusted to yield a 1% aqueous solution (or 2% aqueous solution) or the filtrate is dried, and used as an analysis sample. The solid content may be separated using methods other than filtration, such as centrifugal separation. The drying is preferably vacuum drying performed at 50°C to 80°C.

The electrode according to the second approach includes carboxymethyl cellulose with a degree of etherification of 0.6 or more and 1.0 or less, and niobium oxide particles that has a contact angle with water according to a permeation rate method of 83° or more. The electrode can realize a secondary battery that can exhibit excellent output performance and cycle life performance.

### (Third Approach)

According to a third approach, there is provided a secondary battery including a negative electrode, a positive electrode, and an electrolyte. As the negative electrode, the secondary battery includes the electrode according to the second approach. The negative electrode may be an electrode fabricated using the electrode slurry according to the first approach.

The secondary battery may further include a separator provided between the positive electrode and the negative electrode. The negative electrode, the positive electrode, and the separator may configure an electrode group. The electrolyte may be held in the electrode group.

The secondary battery may further include a container member that houses the electrode group and the electrolyte.

The secondary battery may further include a negative electrode terminal electrically connected to the negative electrode and a positive electrode terminal electrically connected to the positive electrode.

The secondary battery may be, for example, a lithium secondary battery. The secondary battery also includes nonaqueous electrolyte secondary batteries including nonaqueous electrolyte(s).

Hereinafter, the negative electrode, positive electrode, electrolyte, separator, container member, negative electrode terminal, and positive electrode terminal will be described in detail.

### 1) Negative Electrode

The negative electrode may include a negative electrode current collector and a negative electrode active material-containing layer. The negative electrode current collector and the negative electrode active material-containing layer may respectively be the current collector and active material-containing layer that may be included in the electrode according to the second approach. The negative electrode active material-containing layer may be formed by the electrode slurry according to the first approach.

Of the details of the negative electrode, portions that overlap with the details described in the second approach are omitted.

The density of the negative electrode active material-containing layer (excluding the current collector) is preferably from 1.8 g/cm³ to 2.8 g/cm³. The negative electrode having the density of the negative electrode active material-containing layer within this range is excellent in energy density and ability of holding the electrolyte. The density of the negative electrode active material-containing layer is more preferably from 2.1 g/cm³ to 2.6 g/cm³.

The negative electrode may, for example, be fabricated by the same method as that for the electrode according to the second approach.

### 2) Positive Electrode

The positive electrode may include a positive electrode current collector and a positive electrode active material-containing layer. The positive electrode active material-containing layer may be formed on one surface or both of obverse and reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may singly include one species of compound as the positive electrode active material, or alternatively, include two or more species of compounds in combination. Examples of the oxide and sulfide include compounds capable of having Li and Li ions be inserted and extracted.

Examples of such compounds include manganese dioxide (MnO₂), iron oxides, copper oxides, nickel oxides, lithium manganese composite oxides (e.g. , LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., Li_{X}CoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., LiₓMn_{y}Co_{1-y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium phosphates having an olivine structure (e.g., LiₓFePO₄; 0 < x ≤ 1, LiₓFe_{1-y}Mn_{y}PO₄ ; 0 < x ≤ 1, 0 < y ≤ 1, and LiₓCoPC4; 0 < x ≤ 1), iron sulfate (Fe₂(SO₄)₃), vanadium oxides (e.g., V₂O₅), and lithium nickel cobalt manganese composite oxide (LiₓNi_{1-y-z}Co_{y}Mn_{z}O₂; 0 < x ≤ 1, 0 < y < 1, 0 < z < 1, y + z < 1).

Among the above, examples of compounds more preferable as the positive electrode active material include lithium manganese composite oxides having a spinel structure (e.g., LiₓMn₂O₄; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium manganese cobalt composite oxide (e.g., LiₓMn_{y}Co_{1-y}O₂; 0 < x ≤ 1, 0 < y < 1), lithium iron phosphates (e.g., LiₓFePC₄; 0 < x ≤ 1), and lithium nickel cobalt manganese composite oxides (LiₓNi_{1-y-z}Co_{y}Mn_{z}O₂; 0 < x ≤ 1, 0 < y < 1, 0 < z < 1, y + z < 1) . The positive electrode potential can be made high by using these positive electrode active materials.

When an ambient temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with ambient temperature molten salts, cycle life can be improved. Details regarding the ambient temperature molten salt are described later.

The primary particle diameter of the positive electrode active material is preferably from 100 nm to 1 µm. The positive electrode active material having a primary particle size of 100 nm or more is easy to handle during industrial production. In the positive electrode active material having a primary particle size of 1 µm or less, in-solid diffusion of lithium ions can proceed smoothly.

The specific surface area of the positive electrode active material is preferably from 0.1 m²/g to 10 m²/g. With the positive electrode active material having a specific surface area of 0.1 m²/g or more, sufficient sites for inserting and extracting Li ions can be secured. The positive electrode active material having a specific surface area of 10 m²/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluororubber, polyacrylate compounds, imide compounds, carboxymethyl cellulose (CMC), and salts of CMC. One of these may be used as the binder, or alternatively, two or more may be used in combination as the binder.

The electro-conductive agent is added to improve current collection performance and to suppress the contact resistance between the positive electrode active material and the positive electrode current collector. Examples of electro-conductive agent include carbonaceous substances such as vapor grown carbon fiber (VGCF), carbon black such as acetylene black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as anelectrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, decomposition of electrolyte can be reduced during storage under high temperatures.

The positive electrode current collector is preferably an aluminum foil, or an aluminum alloy foil containing one or more selected from the group consisting of Mg, Ti, Zn, Ni, Cr, Mn, Fe, Cu, and Si.

The thickness of the aluminum foil or aluminum alloy foil is preferably from 5 µm to 20 pm, and more preferably 15 µm or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface thereof. This portion may serve as a positive electrode current collecting tab.

The positive electrode may be produced, for example, by a method similar to that for the electrode according to the second approach, except that a positive electrode slurry prepared in the following manner is used in place of the electrode slurry according to the first approach. The positive electrode slurry is prepared for example, by suspending the positive electrode active material, electro-conductive agent, and binder in a solvent.

Alternatively, the positive electrode may also be produced by the following method. First, positive electrode active material, electro-conductive agent, and binder are mixed to obtain a mixture. Next, the mixture is formed into pellets. Then the positive electrode can be obtained by arranging the pellets onto the current collector.

### 3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide (LiN(CF₃SO₂)₂), and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX); linear ethers such as dimethoxy ethane (DME) and diethoxy ethane (DEE); γ-butyrolactone (GBL), acetonitrile (AN), and sulfolane (SL) . These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15°C to 25°C). The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. Having Li ion conductivity, as referred to herein, indicates exhibiting a lithium ion conductivity of 1 × 10⁻⁶ S/cm or more at 25°C. Examples of the inorganic solid electrolyte include oxide solid electrolytes and sulfide solid electrolytes. Specific examples of the inorganic solid electrolyte are described below.

Preferably used as the oxide solid electrolyte is a lithium phosphate solid electrolyte having a NASICON (Sodium (Na) Super Ionic Conductor) structure represented by a general formula Li₁₊ₓMα₂(PO₄)₃. Mα in the above general formula is, for example, one or more selected from the group consisting of titanium (Ti), germanium (Ge), strontium (Sr), zirconium (Zr), tin (Sn), aluminum (Al), and calcium (Ca). The subscript x is within the range of 0 ≤ x ≤ 2.

Specific examples of the lithium phosphate solid electrolyte having the NASICON structure include a LATP compound represented by Li₁₊ₓAlₓTi₂₋ₓ(PO₄)₃ where 0.1 ≤ x ≤ 0.5; a compound represented by Li₁₊ₓAl_{y}Mβ_{2-y}(PO₄)₃ where Mβ is one or more selected from the group consisting of Ti, Ge, Sr, Zr, Sn, and Ca, 0 ≤ x ≤ 1, and 0 ≤ y ≤ 1; a compound represented by Li₁₊ₓAlₓGe₂₋ₓ(PO₄)₃ where 0 ≤ x ≤ 2; a compound represented by Li₁₊ₓAlₓZr₂₋ₓ(PO₄)₃ where 0 ≤ x ≤ 2; a compound represented by Li_{1+x+y}AlₓMγ₂₋ₓSi_{y}P_{3-y}O₁₂ where Mγ is one or more selected from the group consisting of Ti and Ge, 0 < x ≤ 2, and 0 ≤ y < 3; and a compound represented by Li₁₊₂ₓZr₁₋ₓCaₓ(PO₄)₃ where 0 ≤ x < 1.

In addition to the above lithium phosphate solid electrolyte, examples of the oxide solid electrolyte include amorphous LIPON compounds represented by LiₓPO_{y}N_{z} where 2.6 ≤ x ≤ 3.5, 1.9 ≤ y ≤ 3.8, and 0.1 ≤ z ≤ 1.3 (e.g., Li_{2.9}PO_{3.3}N_{0.46}); a compound having a garnet structure represented by La₅₊ₓAₓLa₃₋ₓMδ₂O₁₂ where A is one or more selected from the group consisting of Ca, Sr, and Ba, Mδ is one or more selected from the group consisting of Nb and Ta, and 0 ≤ x ≤ 0.5; a compound represented by Li₃Mδ₂₋ₓL₂O₁₂ where Mδ is one or more selected from the group consisting of Nb and Ta, L may include Zr, and 0 ≤ x ≤ 0.5; a compound represented by Li₇₋₃ₓAlₓLa₃Zr₃O₁₂ where 0 ≤ x ≤ 0.5; a LLZ compound represented by Li₅₊ₓLa₃Mδ₂₋ₓZrₓO₁₂ where Mδ is one or more selected from the group consisting of Nb and Ta, and 0 ≤ x ≤ 2 (e.g., Li₇La₃Zr₂O₁₂); and a compound having a perovskite structure and represented by La_{2/3-x}LiₓTiO₃
where0.3 ≤ x ≤ 0.7.

One or more among the above compounds may be used as the solid electrolyte. Two or more of the above solid electrolytes may be used, as well.

Alternatively, in place of the nonaqueous electrolyte, a liquid aqueous electrolyte or gel aqueous electrolyte may be used as the electrolyte. The liquid aqueous electrolyte is prepared b dissolving, for example, the above-described electrolyte salt as solute in an aqueous solvent. The gel aqueous electrolyte is prepared by obtaining a composite of the liquid aqueous electrolyte and the above-described polymeric material. As the aqueous solvent, a solution including water is used. The Solution including water may be pure water or a mixed solvent between water and an organic solvent.

### 4) Separator

The separator may be made of, for example, a porous film or synthetic resin nonwoven fabric including polyethylene (PE), polypropylene (PP), cellulose, or polyvinylidene fluoride (PVdF). In view of safety, a porous film made of polyethylene or polypropylene is preferred. This is because at a certain temperature, such a porous film melts and can thereby shut off current.

### 5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), prismatic, cylindrical, coin-shaped, or button-shaped. The container member may be appropriately selected depending on battery size and use of the battery.

### 6) Negative Electrode Terminal

The negative electrode terminal may be made of a material that is electrochemically stable at the Li insertion-extraction potential of the negative electrode active materials mentioned above, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance between the negative electrode terminal and the negative electrode current collector.

### 7) Positive Electrode Terminal

The positive electrode terminal may be made of, for example, a material that is electrically stable in the potential range of 3 V to 4.5 V (vs. Li/Li⁺) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

Next, the secondary battery according to the approach will be more concretely described with reference to the drawings.

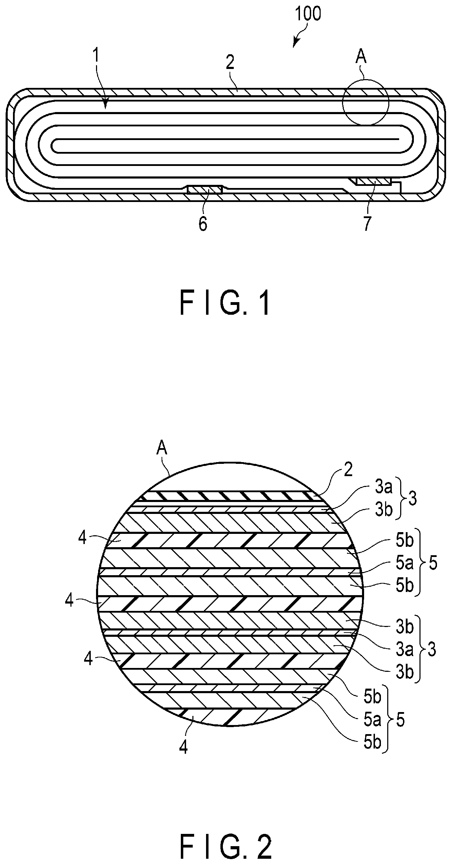

FIG. 1 is a cross-sectional view schematically showing an example of the secondary battery. FIG. 2 is an enlarged cross-sectional view of section A of the secondary battery shown in FIG. 1.

The secondary battery 100 shown in FIGS. 1 and 2 includes a bag-shaped container member 2 shown in FIG. 1, an electrode group 1 shown in FIGS. 1 and 2, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched between the resin layers.

As shown in FIG. 1, the electrode group 1 is a wound electrode group in a flat form. The wound electrode group 1 in a flat form includes a negative electrode 3, a separator 4, and a positive electrode 5, as shown in FIG. 2. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 2. For the other portions of the negative electrode 3, negative electrode active material-containing layers 3b are formed on both of obverse and reverse surfaces of the negative electrode current collector 3a.

The positive electrode 5 includes a positive electrode current collector 5a and positive electrode active material-containing layers 5b formed on both of obverse and reverse surfaces of the positive electrode current collector 5a.

As shown in FIG. 1, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by heat-sealing the resin layer.

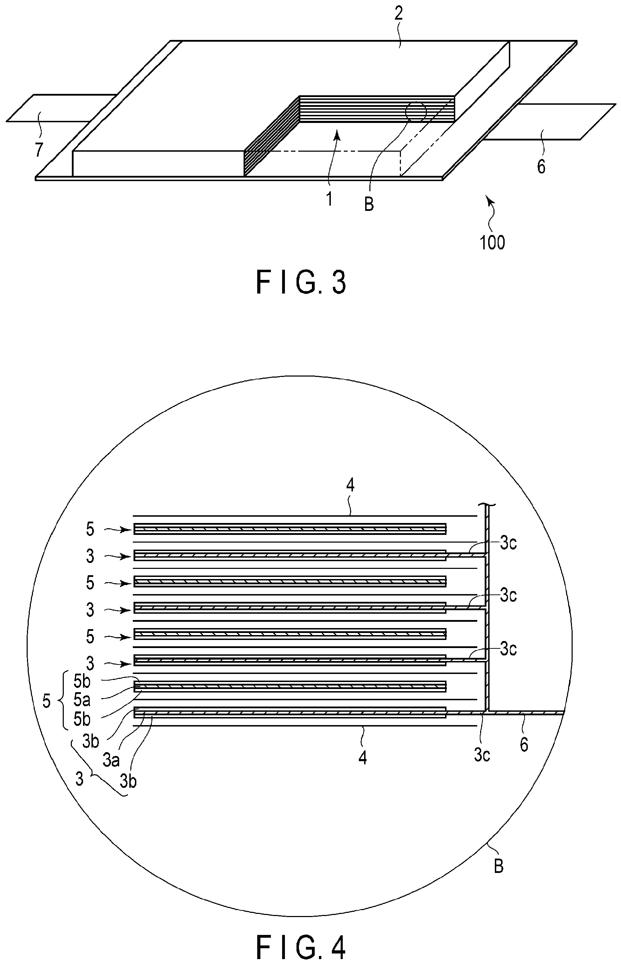

The secondary battery according to the approach is not limited to the secondary battery of the structure shown in FIGS. 1 and 2, and may be, for example, a battery of a structure as shown in FIGS. 3 and 4.

FIG. 3 is a partially cut-out perspective view schematically showing another example of the secondary battery. FIG. 4 is an enlarged cross-sectional view of section B of the secondary battery shown in FIG. 3.

The secondary battery 100 shown in FIGS. 3 and 4 includes an electrode group 1 shown in FIGS. 3 and 4, a container member 2 shown in FIG. 3, and an electrolyte, which is not shown. The electrode group 1 and electrolyte are housed in the container member 2. The electrolyte is held in the electrode group 1.

The container member 2 is made of a laminate film including two resin layers and a metal layer sandwiched between the resin layers.

As shown in FIG. 4, the electrode group 1 is a stacked electrode group. The stacked electrode group 1 has a structure in which negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces thereof.

The negative electrode current collector 3a of each of the negative electrodes 3 includes at one end, a portion where the negative electrode active material-containing layer 3b is not supported on either surface. This portion serves as a negative electrode current collecting tab 3c. As shown in FIG. 4, the negative electrode current collecting tabs 3c do not overlap the positive electrodes 5. The plural negative electrode current collecting tabs 3c are electrically connected to the strip-shaped negative electrode terminal 6. A tip of the strip-shaped negative electrode terminal 6 is drawn outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs 3c, the positive electrode current collecting tabs do not overlap the negative electrodes 3. Further, the positive electrode current collecting tabs are located on the opposite side of the electrode group 1 with respect to the negative electrode current collecting tabs 3c. The positive electrode current collecting tabs are electrically connected to the strip-shaped positive electrode terminal 7. A tip of the strip-shaped positive electrode terminal 7 is located on the opposite side relative to the negative electrode terminal 6 and drawn outside from the container member 2.

The secondary battery according to the third approach includes the electrode according to the second approach. Thus, the secondary battery exhibits excellent output performance and cycle life performance.

### (Fourth Approach)

According to a fourth approach, a battery module is provided. The battery module includes plural of secondary batteries according to the third approach.

In the battery module, each of the single-batteries may be arranged to be electrically connected in series or in parallel, or may be arranged in combination of in-series connection and in-parallel connection.

An example of the battery module according to the approach will be described next, with reference to the drawings.

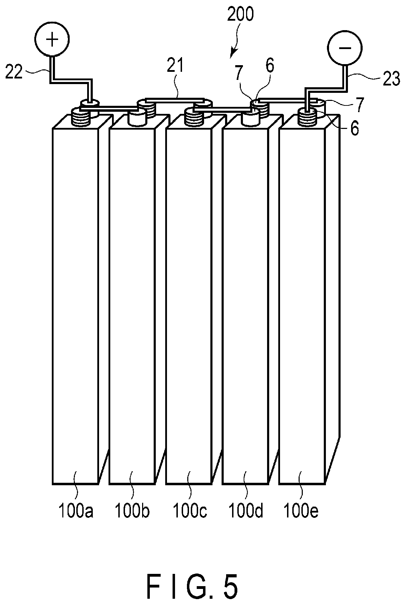

FIG. 5 is a perspective view schematically showing an example of the battery module. The battery module 200 shown in FIG. 5 includes five single-batteries 100a to 100e, four bus bars 21, a positive electrode-side lead 22, and a negative electrode-side lead 23. Each of the five single-batteries 100a to 100e is the secondary battery according to the third approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 5 is a battery module of five-in-series connection. Although no example is depicted in drawing, in a battery module including plural single-batteries that are electrically connected in parallel, for example, the plural single-batteries may be electrically connected by having plural negative electrode terminals being connected to each other by bus bars while having plural positive electrode terminals being connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the fourth approach includes the secondary battery according to the third approach. Therefore, the battery module exhibits excellent output performance and cycle life performance.

### (Fifth Approach)

According to a fifth approach, a battery pack is provided. The battery pack includes a battery module according to the fourth approach. The battery pack may include a single secondary battery according to the third approach, in place of the battery module according to the fourth approach.

The battery pack may further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the secondary battery, and/or to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the approach will be described with reference to the drawings.

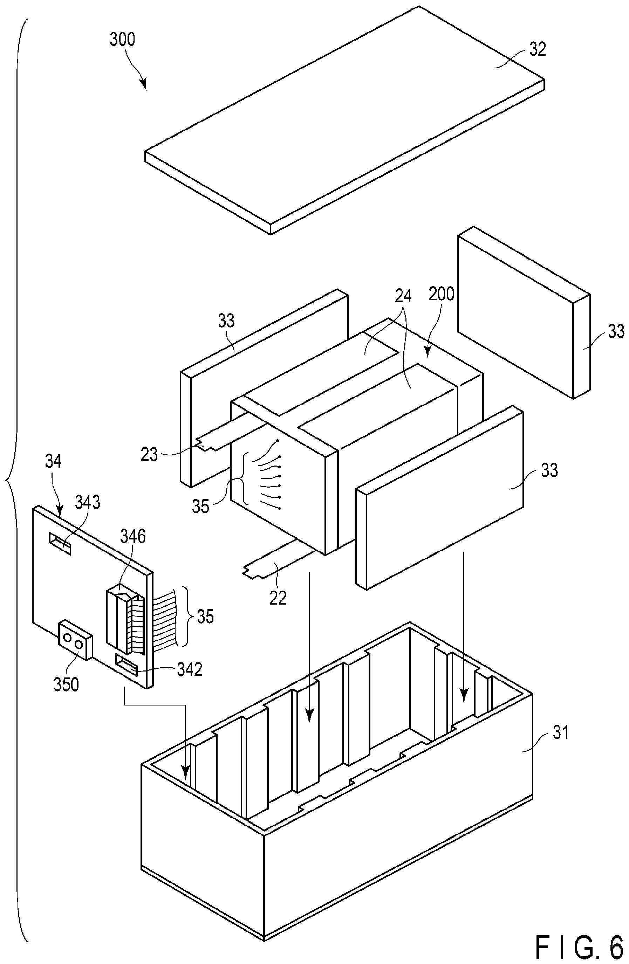

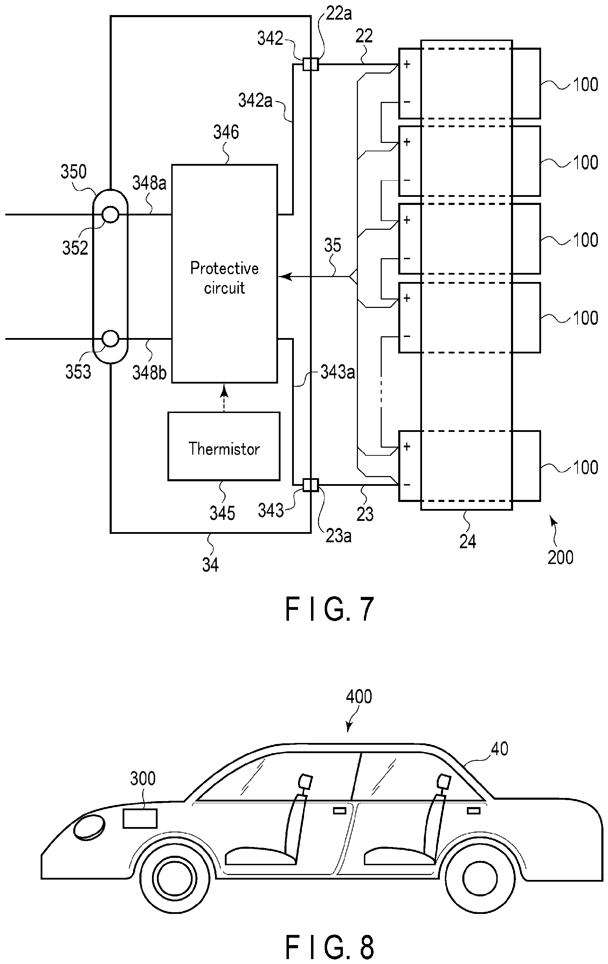

FIG. 6 is an exploded perspective view schematically showing an example of the battery pack. FIG. 7 is a block diagram showing an example of an electric circuit of the battery pack shown in FIG. 6.

A battery pack 300 shown in FIGS. 6 and 7 includes a housing container 31, a lid 32, protective sheets 33, a battery module 200, a printed wiring board 34, wires 35, and an insulating plate (not shown).

The housing container 31 shown in FIG. 6 is a prismatic bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tapes 24.

At least one of the plural single-batteries 100 is a secondary battery according to the third approach. The plural single-batteries 100 are electrically connected in series, as shown in FIG. 7. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tapes 24 fasten the plural single-batteries 100. The plural single-batteries 100 may be fixed using a heat shrinkable tape in place of the adhesive tapes 24. In this case, protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200. The one end of the positive electrode-side lead 22 is electrically connected to the positive electrode (s) of one or more single-battery 100. One end of the negative electrode-side lead 23 is connected to the battery module 200. The one end of the negative electrode-side lead 23 is electrically connected to the negative electrode(s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a surface of the battery module 200 . An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device(s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery(s) 100. When detecting over charge or the like for each of the single batteries 100, the battery voltage may be detected, or a positive electrode potential or negative electrode potential may be detected. In the latter case, a lithium electrode to be used as a reference electrode may be inserted into each single-battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the fifth approach is provided with the secondary battery according to the third approach or the battery module according to the fourth approach. Accordingly, the battery pack exhibits excellent output performance and cycle life performance.

### (Sixth Approach)

According to a sixth approach, a vehicle is provided. The battery pack according to the fifth approach is installed on this vehicle.

In the vehicle, the battery pack is configured, for example, to recover regenerative energy from motive force of the vehicle. The vehicle may include a mechanism (a regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

The installing position of the battery pack within the vehicle is not particularly limited. For example, when installing the battery pack on an automobile, the battery pack may be installed in the engine compartment of the automobile, in rear parts of the vehicle body, or under seats.

Plural battery packs may installed in the vehicle. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle is explained below, with reference to the drawings.

FIG. 8 is a partially see-through diagram schematically showing an example of the vehicle.

A vehicle 400, shown in FIG. 8 includes a vehicle body 40 and a battery pack 300 according to the fifth approach. In the example shown in FIG. 8, the vehicle 400 is a four-wheeled automobile.

This vehicle 400 may have plural battery packs 300 installed therein. In such a case, the batteries (e.g., single-batteries or battery module) included in the battery packs 300 may be connected in series, connected in parallel, or connected in a combination of in-series connection and in-parallel connection.

In FIG. 8, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

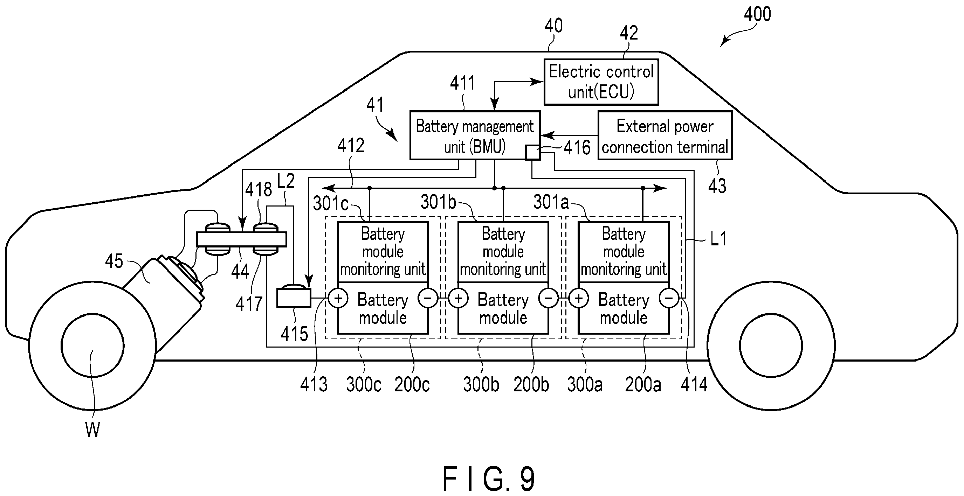

Next, with reference to FIG. 9, an aspect of operation of the vehicle according to the approach is explained.

FIG. 9 is a diagram schematically showing an example of a control system related to an electric system in the vehicle. A vehicle 400, shown in FIG. 9, is an electric automobile.

The vehicle 400, shown in FIG. 9, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 9, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the third approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In the communication bus 412, a set of communication lines is shared at multiple nodes (i.e., the battery management unit 411 and one or more battery module monitoring units 301a to 301c) . The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 9) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements. The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the sixth approach is installed with the battery pack according to the fifth approach. Thus, the vehicle can exhibit high performance, and has high reliability.

### Examples

Examples will be described below, but the approaches are not limited to the examples described below.

For the synthesis of the niobium oxide particles, the crystal phase and the composition of the synthesized product were analyzed according to the above-described procedure by the powder XRD method and the ICP-AES method, so as to confirm that the target product was obtained. For the obtained niobium oxide particles, the powder contact angle with water and the average particle size (D₅₀) were measured by the method described above. In addition, for carboxymethyl cellulose (CMC) used as a thickener, the degree of etherification and the viscosity in a 1% aqueous solution were found by the measurement method described above. However, for the CMC used in Example 4 and others noted, the 1% viscosity was less than the lower limit value of measurement for the apparatus, and thus the 2% viscosity was measured.

### <Slurry Preparation>

### (Example 1)

First, as niobium oxide particles, particles of a monoclinic niobium titanium oxide for which a crystal main phase is represented by TiNb₂O₇ were synthesized as follows. TiO₂ particles as a Ti source and Nb₂O₅ particles as a Nb source were prepared. Here, a Nb source material of which the K concentration had been reduced in advance was used. The particles were sufficiently mixed at a predetermined composition ratio by a solid phase mixing method, and the obtained mixture was fired at 1150°C for 12 hours. In this way, niobium oxide particles were synthesized.

Using the obtained niobium oxide particles as an active material, an electrode slurry was prepared as follows. Acetylene black and carbon nanofibers were prepared as electro-conductive agents, styrene-butadiene rubber (SBR) was prepared as a binder, and carboxymethyl cellulose (CMC) was prepared as a thickener. The degree of etherification of the prepared CMC was 0.7, and the viscosity of a 1% aqueous solution of the CMC was 50 mPa. 100 parts by mass of niobium oxide particles, 5 parts by mass of acetylene black, 2.5 parts by mass of carbon nanofibers, 4 parts by mass of SBR, and 2.5 parts by mass of CMC were added to water and mixed to obtain a slurry.

### (Example 2)

Niobium oxide particles were synthesized in the same manner as Example 1, except that the firing temperature was changed to 1050°C and the fired powder obtained by firing was subjected to pulverization treatment. An electrode slurry was prepared in the same manner as Example 1, except that the obtained niobium oxide particles were used instead as an active material.

### (Example 3)

In addition to the Ti source and the Nb source, Fe₂O₃ particles were further prepared as an Fe source. First, Fe₂O₃ particles as Fe source were mixed with TiO₂ particles as Ti source to synthesize an Fe-containing Ti source powder. In the synthesis, first, TiO₂ particles and Fe₂O₃ particles were mixed such that the Fe concentration was 1200 ppm by mass with respect to TiO₂ particles, and the mixture was subjected to pulverization treatment using a ball mill. The mixture after pulverization was fired at 900°C to obtain an Fe-containing Ti source powder.

Next, the obtained Fe-containing Ti source powder and Nb₂O₅ particles as Nb source were sufficiently mixed, and the obtained mixture was fired at 1100°C for 12 hours. The firing was performed in the air. The resulting fired powder was subjected to pulverization treatment. In this way, niobium oxide particles were prepared.

An electrode slurry was prepared in the same manner as Example 1, except that the obtained niobium oxide particles were used instead as an active material.

### (Example 4)

Niobium oxide particles were prepared in the same manner as Example 3, except that the firing temperature of the mixture of Fe-containing Ti source powder and Nb source was changed to 1050°C and the pulverization treatment after firing was omitted. Further, CMC having a degree of etherification of 0.75 and a viscosity of a 2% aqueous solution of 17 mPa was prepared. Since the viscosity of a 1% aqueous solution was less than the measurement lower limit value of the apparatus, the viscosity in a 2% aqueous solution was examined instead.

An electrode slurry was prepared in the same manner as Example 1, except that the above niobium oxide particles and CMC were used instead as an active material and a thickener, respectively.

### (Example 5)

First, as niobium oxide particles, particles of a monoclinic niobium titanium oxide for which a crystal main phase is represented by TiNb₂O₇ were synthesized as follows. As starting materials, a solution of titanyl sulfate in dilute sulfuric acid having a molar concentration of Ti of 1.28 mol/L and an ethanol solution of niobium chloride having a molar concentration of Nb of 0.5 mol/L were prepared. These solutions were mixed by a liquid phase mixing method in such amounts that the molar ratio between Ti and Nb was a predetermined value, and a transparent mixed solution without any precipitation of foreign matters such as hydroxides was obtained.

Next, ammonia water was added dropwise into the mixed solution while stirring, and thereby the pH of the solution was adjusted to 8. A white precipitate had generated in the mixed solution by the addition of ammonia water. This precipitate was taken out from the mixed solution, washed with pure water, and collected by filtration. Next, the precipitate thus collected was dried with a heater at 80°C. After that, aggregation of the precipitate was resolved with a planetary ball mill. After that, this precipitate was fired at 1000°C for 30 minutes in the air. A powder of niobium oxide particles was obtained by the firing.

An electrode slurry was prepared in the same manner as Example 1, except that the obtained niobium oxide particles were used instead as an active material.

### (Example 6)

After the mixture of Fe-containing Ti source powder and Nb source was fired, the obtained fired powder was subjected to pulverization treatment to adjust the average particle size to 0.42 µm. Further, the same CMC (having a degree of etherification of 0.75 and a viscosity of a 2% aqueous solution of 17 mPa) as that of Example 4 was prepared.

An electrode slurry was prepared in the same manner as Example 1, except that the above niobium oxide particles and CMC were used instead as an active material and a thickener, respectively.

### (Example 7)

Niobium oxide particles were prepared by the same method as Example 5. Further, CMC having a degree of etherification of 0.75 and a viscosity of a 1% aqueous solution of 150 mPa was prepared.

An electrode slurry was prepared in the same manner as Example 1, except that the above niobium oxide particles and CMC were used instead as an active material and a thickener, respectively.

### (Example 8)

Niobium oxide particles were prepared in the same manner as Example 3, except that the pulverization treatment after firing of the mixture of Fe-containing Ti source powder and Nb source was omitted. Further, the same CMC (having a degree of etherification of 0.75 and a viscosity of a 1% aqueous solution of 150 mPa) as that of Example 7 was prepared.

An electrode slurry was prepared in the same manner as Example 1, except that the above niobium oxide particles and CMC were used instead as an active material and a thickener, respectively.

### (Example 9)

As niobium oxide particles, particles in which a crystal main phase within primary particles was a mixed phase of a Nb₁₀Ti₂O₂₉ phase and a Nb₂₄TiO₆₂ phase were synthesized as follows. TiO₂ particles as a Ti source and Nb₂O₅ particles as a Nb source were prepared. The particles were sufficiently mixed at a predetermined composition ratio by a solid phase mixing method, and the obtained mixture was subjected to preliminary firing (first firing) at a temperature of 800°C for 12 hours. After the preliminary firing, the obtained fired powder was subjected to main firing (second firing) at 1100°C for 12 hours. In this manner, niobium oxide particles were synthesized.

The same CMC (having a degree of etherification of 0.75 and a viscosity of a 2% aqueous solution of 17 mPa) as that of Example 4 was prepared. An electrode slurry was prepared in the same manner as Example 1, except that the above niobium oxide particles and CMC were used instead as an active material and a thickener, respectively.

### (Example 10)

The Nb₂O₅ particles prepared as the Nb source in the above examples were used as they were as niobium oxide particles, without being subjected to synthesis. Further, the same CMC (having a degree of etherification of 0.75 and a viscosity of a 2% aqueous solution of 17 mPa) as that of Example 4 was prepared.

An electrode slurry was prepared in the same manner as Example 1, except that the above niobium oxide particle and CMC were used instead as an active material and a thickener, respectively.

### (Example 11)

As niobium oxide particles, particles of a niobium tungsten oxide of which a crystal main phase is represented by Nb₁₆W₅O₅₅ were synthesized as follows. As starting materials, an ammonium metatungstate solution having a molar concentration of W of 0.5 mol/L and an ethanol solution of niobium chloride having a molar concentration of Nb of 0.5 mol/L were prepared. These solutions were mixed by a liquid phase mixing method in such amounts that the molar ratio between W and Nb was a predetermined value, and a transparent mixed solution without any precipitation of foreign matters such as hydroxides was obtained.

Next, ammonia water was added dropwise into the mixed solution while stirring, and thereby the pH of the solution was adjusted to 8. A white precipitate was generated in the mixed solution by the addition of ammonia water. This precipitate was taken out from the mixed solution, washed with pure water, and collected by filtration. Next, the precipitate thus collected was dried with a heater at 80°C. After that, aggregation of the precipitate was resolved with a planetary ball mill. After that, this precipitate was fired at 1050°C for 30 minutes in the air. A powder of niobium oxide particles was obtained by the firing.

The same CMC (having a degree of etherification of 0.75 and a viscosity of a 2% aqueous solution of 17 mPa) as that of Example 4 was prepared. An electrode slurry was prepared in the same manner as Example 1, except that the above niobium oxide particles and CMC were used instead as an active material and a thickener, respectively.

### (Example 12)

As niobium oxide particles, particles of niobium tungsten oxide of which a crystal main phase is represented by Nb₁₆W₅O₅₅ were synthesized. The niobium oxide particles were synthesized by the same method as Example 11, except that the amounts of various solutions as starting materials at the time of mixing by a liquid phase mixing method were changed.

The same CMC (having a degree of etherification of 0.75 and a viscosity of a 2% aqueous solution of 17 mPa) as that of Example 4 was prepared. An electrode slurry was prepared in the same manner as Example 1 , except that the above niobium oxide particles and CMC were used instead as an active material and a thickener, respectively.

### (Comparative Example 1)

Niobium oxide particles were synthesized in the same manner as Example 1, except that the firing temperature was changed to 1100°C. Further, CMC having a degree of etherification of 1.3 and a viscosity of a 1% aqueous solution of 1300 mPa was prepared.

An electrode slurry was prepared in the same manner as Example 1, except that the above niobium oxide particles and CMC were used instead as an active material and a thickener, respectively.

### (Comparative Example 2)

Niobium oxide particles prepared in the same manner as Example 2 were further subjected to pulverization treatment. Further, the same CMC (having a degree of etherification of 1.3 and a viscosity of a 1% aqueous solution of 1300 mPa) as that of Comparative Example 1 was prepared.

An electrode slurry was prepared in the same manner as Example 1, except that the above niobium oxide particles and CMC were used instead as an active material and a thickener, respectively.

### (Comparative Example 3)

Niobium oxide particles were prepared in the same manner as Comparative Example 1. Further, the same CMC (having a degree of etherification of 0.75 and a viscosity of a 1% aqueous solution of 150 mPa) as that of Example 7 was prepared.

An electrode slurry was prepared in the same manner as Example 1, except that the above niobium oxide particles and CMC were used instead as an active material and a thickener, respectively.

### (Comparative Example 4)

Niobium oxide particles were prepared by the same method as Example 5. Further, the same CMC (having a degree of etherification of 1.3 and a viscosity of a 1% aqueous solution of 1300 mPa) as that of Comparative Example 1 was prepared.

An electrode slurry was prepared in the same manner as Example 1 except that the above niobium oxide particles and CMC were used instead as an active material and a thickener, respectively.

### (Comparative Example 5)

Niobium oxide particles were prepared by the same method as Example 5. Further, CMC having a degree of etherification of 1.3 and a viscosity of a 1% aqueous solution of 70 mPa was prepared.

An electrode slurry was prepared in the same manner as Example 1 except that the above niobium oxide particles and CMC were used instead as an active material and a thickener, respectively.

### <Electrochemical Measurement>

The electrode slurry obtained in each example was applied onto both surfaces of a current collector made with aluminum foil having a thickness of 12 pm. The applied slurry was dried and then pressed to produce a negative electrode having an electrode density (excluding the current collector) of 2.4 g/cm³.

### (Production of positive electrode)

A positive electrode was produced as follows. A lithium nickel manganese cobalt composite oxide (LiNi_{1/3}Mn_{1/3}Co_{1/3}O₂) was used as a positive electrode active material.

First, 5 parts by mass of acetylene black as an electro-conductive agent was mixed with 100 parts by mass of the positive electrode active material to obtain a mixture. Next, the mixture was dispersed in NMP to obtain a dispersion. PVdF as a binder was mixed with the dispersion at a ratio of 5 parts by mass relative to the positive electrode active material to prepare a positive electrode slurry. The slurry was applied onto both surfaces of a current collector made with aluminum foil having a thickness of 12 um. The applied slurry was dried and then pressed to obtain a positive electrode having an electrode density (excluding the current collector) of 2.1 g/cm³.

### (Production of electrode group)

The positive electrode and the negative electrode produced in the above manner were stacked with a polyethylene separator interposed therebetween to obtain a stack. Next, the stack was wound and further pressed to obtain a wound electrode group in a flat shape. A positive electrode terminal and a negative electrode terminal were connected to the electrode group.

### (Preparation of nonaqueous electrolyte)

A LiPF₆ supporting salt was dissolved at a concentration of 1 mol/L in a mixed solvent in which ethylene carbonate (EC) and diethyl carbonate (DEC) were mixed at a volume ratio of 1:2, and thereby a liquid nonaqueous electrolyte (electrolytic solution) was prepared.

### (Assembly of nonaqueous electrolyte battery)

The electrode group and the nonaqueous electrolyte produced in the above manner were used to produce a nonaqueous electrolyte battery cell.

The produced battery cell was charged and discharged in a cell voltage range of 1.5 V to 3.0 V. The charge/discharge current value was set to 1 C (hourly discharge rate), and the 1 C discharge capacity was examined at 45°C. The value of 1 C discharge capacity is an index of energy density.

Next, the cell of each example was subjected to a life test of repeating 1 C charge/discharge in a cell voltage range of 1.5 V to 3.0 V in a 45°C environment. Under these conditions, charge and discharge were repeated 1000 cycles (a charge and a discharge being taken as one cycle), and the 1 C discharge capacity was measured again. The discharge capacity after 1000 cycles was divided by the discharge capacity before the cycles to calculate a cycle capacity retention ratio (cycle capacity retention ratio = (0.2 C discharge capacity after 1000 cycles/0.2 C discharge capacity before 1000 cycles) × 100%). Further, in order to evaluate output performance, a coulombic efficiency (= (discharge capacity/charge capacity) × 100%) in each cycle was calculated, and the average value thereof was obtained.

Table 1 summarizes details of the niobium oxide particles prepared in each example and the synthesis thereof. Specifically, the table shows the crystal main phase of the obtained niobium oxide particles, the method of mixing the starting materials for synthesis, the firing temperature of main firing (the last-performed firing), whether pulverization was performed after main firing or not, and whether Fe was added or not. Further, the table shows the concentration of a residual alkali impurity K, determined by ICP-AES measurement.

Table 2 summarizes, for each example, the powder contact angle and the average particle size (D₅₀) of niobium oxide particles, the degree of etherification and the 1% or 2% viscosity of CMC, and the average coulombic efficiency and the capacity retention ratio during 1000 charge/discharge cycles evaluated by the above electrochemical measurement.

**[Table 1]**

| | Crystal main phase | Starting material mixing method | Firing temperature /°C | Whether pulverization was performed or not | Whether Fe was added or not | K concentration /ppm by mass |
|---|---|---|---|---|---|---|
| Example 1 | TiNb₂O₇ | Solid phase method | 1150 | Not performed | Not added | 90 |
| Example 2 | TiNb₂O₇ | Solid phase method | 1050 | Performed | Not added | 1020 |
| Example 3 | TiNb₂O₇ | Solid phase method | 1100 | Performed | Added | 1020 |
| Example 4 | TiNb₂O₇ | Solid phase method | 1050 | Not performed | Added | 1020 |
| Example 5 | TiNb₂O₇ | Liquid phase method | 1000 | Not performed | Added | 1020 |
| Example 6 | TiNb₂O₇ | Solid phase method | 1050 | Performed | Added | 1020 |
| Example 7 | TiNb₂O₇ | Liquid phase method | 1000 | Not performed | Added | 1020 |
| Example 8 | TiNb₂O₇ | Solid phase method | 1100 | Not performed | Added | 1020 |
| Example 9 | Nb₁₀Ti₂O₂₉/ Nb₂₄TiO₆₂ | Solid phase method | 1100 | Not performed | Not added | 90 |
| Example 10 | Nb₂O₅ | - | - | Not performed | Not added | 80 |
| Example 11 | Nb₁₆W₅O₅₅ | Liquid phase method | 1050 | Not performed | Not added | 75 |
| Example 12 | Nb₁₈W₁₆O₉₃ | Liquid phase method | 1050 | Not performed | Not added | 105 |
| Comparative Example 1 | TiNb₂O₇ | Solid phase method | 1100 | Not performed | Not added | 1620 |
| Comparative Example 2 | TiNb₂O₇ | Solid phase method | 1050 | Performed | Not added | 1020 |
| Comparative Example 3 | TiNb₂O₇ | Solid phase method | 1100 | Not performed | Not added | 1620 |
| Comparative Example 4 | TiNb₂O₇ | Liquid phase method | 1000 | Not performed | Added | 1020 |
| Comparative Example 5 | TiNb₂O₇ | Liquid phase method | 1000 | Not performed | Added | 1020 |

**[Table 2]**

| | Nb oxide particles | | CMC | | Electrochemical evaluation | |
|---|---|---|---|---|---|---|
| | Powder Contact angle /° | D₅₀ /µm | Degree of etherification | 1% Viscosity /mPa | Average Coulombic efficiency /% | 45°C 1000 cycles Capacity retention ratio /% |
| Example 1 | 86.14 | 1.4 | 0.7 | 50 | 99.94 | 94.8 |
| Example 2 | 85.31 | 1.4 | 0.7 | 50 | 99.92 | 94.5 |
| Example 3 | 83.74 | 1.38 | 0.7 | 50 | 99.96 | 95.2 |
| Example 4 | 83.74 | 1.39 | 0.75 | 17* | 99.97 | 95.6 |
| Example 5 | 85.98 | 0.88 | 0.75 | 17* | 99.98 | 95.8 |
| Example 6 | 85.22 | 0.42 | 0.75 | 17* | 99.96 | 95.7 |
| Example 7 | 85.98 | 0.88 | 0.75 | 150 | 99.93 | 95.8 |
| Example 8 | 85.98 | 1.89 | 0.75 | 150 | 99.98 | 94 |
| Example 9 | 86.28 | 1.23 | 0.75 | 17* | 99.98 | 95.2 |
| Example 10 | 85.98 | 0.98 | 0.75 | 17* | 99.97 | 95 |
| Example 11 | 86.99 | 1.02 | 0.75 | 17* | 99.97 | 95.9 |
| Example 12 | 87.2 | 1.24 | 0.75 | 17* | 99.98 | 96 |
| Comparative Example 1 | 81.96 | 1.42 | 1.3 | 1300 | 99.82 | 94.9 |
| Comparative Example 2 | 82.12 | 1.38 | 1.3 | 1300 | 99.82 | 94.9 |
| Comparative Example 3 | 81.96 | 1.42 | 0.75 | 150 | 99.83 | 94.9 |
| Comparative Example 4 | 85.98 | 0.88 | 1.3 | 1300 | 99.79 | 94 |
| Comparative Example 5 | 85.98 | 0.88 | 1.3 | 70 | 99.8 | 93.8 |

| | | | | | | |
|---|---|---|---|---|---|---|
| *Since the 1% viscosity was below the measurement lower limit, the 2% viscosity is given instead. | | | | | | |

As shown in Table 2, in Examples 1 to 12, the niobium oxide particles exhibited contact angles of 83° or more with water, and had degrees of etherification of CMC in the range of 0.6 or more and 1.0 or less. In contrast, in Comparative Examples 1 to 3, the contact angle of the niobium oxide particles with water was less than 83°. In Comparative Examples 1 and 2, the degree of etherification of CMC was more than 1.0, as well. In Comparative Examples 4 and 5, the contact angle of the niobium oxide particles was 83° or more, but the degree of etherification of CMC was more than 1.0. The batteries including the negative electrodes produced using the electrode slurries prepared in Examples 1 to 12 exhibited higher average coulombic efficiencies and higher capacity retention ratios than the batteries including the negative electrodes produced using the electrode slurries prepared in Comparative Examples 1 to 3. Further, the batteries using the electrode slurries according to Examples 1 to 12 exhibited higher average coulombic efficiencies than the cells using the slurries according to Comparative Examples 4 and 5, and exhibited equal or higher capacity retention ratios.

According to at least one approach and example described above, an electrode slurry and an electrode are provided. The electrode slurry and electrode include carboxymethyl cellulose having a degree of etherification of 0.6 or more and 1.0 or less and niobium oxide particles having a contact angle with water according to a permeation rate method of 83° or more. The above electrode slurry and electrode can realize a secondary battery capable of exhibiting excellent output performance and cycle life performance.

The present disclosure also encompasses the following approaches of electrode slurries, electrodes, and the like:
1. An electrode slurry comprising:
   carboxymethyl cellulose having a degree of etherification of 0.6 or more and 1.0 or less; and
   niobium oxide particles having a contact angle with water according to a permeation rate method of 83° or more.
2. The electrode slurry according to clause 1, wherein an average particle size x (µm) of the niobium oxide particles is 1.5 µm or less, and a 1% viscosity y (mPa·s) of the carboxymethyl cellulose satisfies y ≤ x × 100 mPa·s/µm.
3. The electrode slurry according to clause 2, wherein the average particle size x (µm) of the niobium oxide particles is 0.4 um or more.
4. The electrode slurry according to any one of clauses 1 to 3, further comprising a binder or further comprising the binder and an electro-conductive agent, wherein a total content of the carboxymethyl cellulose, the binder, and the electro-conductive agent is 0.5 parts by mass or more and 20 parts by mass or less with respect to 100 parts by mass of the niobium oxide particles.
5. An electrode comprising:
   carboxymethyl cellulose having a degree of etherification of 0.6 or more and 1.0 or less; and
   niobium oxide particles having a contact angle with water according to a permeation rate method of 83° or more.
6. The electrode according to clause 5, wherein an average particle size x (µm) of the niobium oxide particles is 0.4 µm or more and 1.5 µm or less, and a 1% viscosity y (mPa·s) of the carboxymethyl cellulose satisfies y ≤ x × 100 mPa·s/µm.
7. The electrode according to clause 5 or 6, further comprising a binder or further comprising the binder and an electro-conductive agent, wherein a total content of the carboxymethyl cellulose, the binder, and the electro-conductive agent is 0.5 parts by mass or more and 20 parts by mass or less with respect to 100 parts by mass of the niobium oxide particles.
8. A secondary battery comprising:
   a positive electrode;
   a negative electrode; and
   an electrolyte,
   wherein the negative electrode includes the electrode according to any one of clauses 5 to 7.
9. A battery pack comprising the secondary battery according to clause 8.
10. The battery pack according to clause 9, further comprising:
   an external power distribution terminal; and
   a protective circuit.
11. The battery pack according to clause 9 or 10, further comprising plural of the secondary battery, the secondary batteries being electrically connected in series, in parallel, or in a combination of in series and in parallel.
12. A vehicle comprising the battery pack according to any one of clauses 9 to 11.
13. The vehicle according to clause 12, comprising a mechanism that converts kinetic energy of the vehicle into regenerative energy.

While certain arrangements have been described, these arrangements have been presented by way of example only, and are not intended to limit the scope of the inventions. Indeed, the apparatuses* described herein may be embodied in a variety of other forms; furthermore various omissions, substitutions and changes in the form of the electrode slurries, electrodes, and the like described herein may be made.

## Claims

1. An electrode slurry comprising:
carboxymethyl cellulose having a degree of etherification of 0.6 or more and 1.0 or less; and
niobium oxide particles having a contact angle with water according to a permeation rate method of 83° or more.

2. The electrode slurry according to claim 1, wherein an average particle size x (µm) of the niobium oxide particles is 1.5 µm or less, and a 1% viscosity y (mPa·s) of the carboxymethyl cellulose satisfies y ≤ x × 100 mPa·s/µm.

3. The electrode slurry according to claim 2, wherein the average particle size x (µm) of the niobium oxide particles is 0.4 µm or more.

4. The electrode slurry according to any one of claims 1 to 3, further comprising a binder or further comprising the binder and an electro-conductive agent, wherein a total content of the carboxymethyl cellulose, the binder, and the electro-conductive agent is 0.5 parts by mass or more and 20 parts by mass or less with respect to 100 parts by mass of the niobium oxide particles.

5. An electrode comprising:
carboxymethyl cellulose having a degree of etherification of 0.6 or more and 1.0 or less; and
niobium oxide particles having a contact angle with water according to a permeation rate method of 83° or more.

6. The electrode according to claim 5, wherein an average particle size x (µm) of the niobium oxide particles is 0.4 um or more and 1.5 µm or less, and a 1% viscosity y (mPa·s) of the carboxymethyl cellulose satisfies y ≤ x × 100 mPa·s/µm.

7. The electrode according to claim 5 or 6, further comprising a binder or further comprising the binder and an electro-conductive agent, wherein a total content of the carboxymethyl cellulose, the binder, and the electro-conductive agent is 0.5 parts by mass or more and 20 parts by mass or less with respect to 100 parts by mass of the niobium oxide particles.

8. A secondary battery (100) comprising:
a positive electrode (5);
a negative electrode (3); and
an electrolyte,
wherein the negative electrode (3) includes the electrode according to any one of claims 5 to 7.

9. A battery pack (300) comprising the secondary battery (100) according to claim 8.

10. The battery pack (300) according to claim 9, further comprising:
an external power distribution terminal (350); and
a protective circuit (346).

11. The battery pack (300) according to claim 9 or 10, further comprising plural of the secondary battery (100), the secondary batteries (100) being electrically connected in series, in parallel, or in a combination of in series and in parallel.

12. A vehicle (400) comprising the battery pack (300) according to any one of claims 9 to 11.

13. The vehicle (400) according to claim 12, comprising a mechanism that converts kinetic energy of the vehicle (400) into regenerative energy.
